# EUROPÄISCHE PATENTSCHRIFT

(11) **EP 2 966 850 B1**
(45) Veröffentlichungstag und Bekanntmachung des Hinweises auf die Patenterteilung: **13.01.2021**
(21) Anmeldenummer: 15171586.9
(22) Anmeldetag: 11.06.2015
(51) Int. Cl.: H04N 1/54, H04N 1/60

(54) **VERFAHREN ZUR BERECHNUNG VON ERSATZFARBEN FÜR SONDERFARBEN**
METHOD FOR CALCULATING REPLACEMENT COLOURS FOR SPECIAL COLOURS
PROCEDE DE CALCUL DE COULEURS DE REMPLACEMENT POUR COULEURS SPECIALES

(30) Priorität: 07.07.2014 DE 102014010061
(43) Veröffentlichungstag der Anmeldung: 13.01.2016
(73) Patentinhaber: Heidelberger Druckmaschinen AG, 69115 Heidelberg (DE)
(72) Erfinder: Bestmann, Günter, 24161 Altenholz (DE)

(56) Entgegenhaltungen:
- US-A1- 2008 043 271
- US-A1- 2009 015 888
- US-A1- 2009 161 125
- US-A1- 2009 296 113
- US-A1- 2011 090 548
- US-A1- 2011 199 626
- US-A1- 2012 086 959

## Beschreibung

Die vorliegende Erfindung betrifft ein Verfahren zur Berechnung von Ersatzfarben für Sonderfarben.

Die Erfindung liegt in dem technischen Gebiet der elektronischen Reproduktionstechnik.

In der Reproduktionstechnik werden Druckvorlagen für Druckseiten erzeugt, die alle zu druckenden Elemente wie Texte, Grafiken und Bilder enthalten. Für den farbigen Druck wird für jede Druckfarbe eine separate Druckvorlage erzeugt, die alle Elemente enthält, die in der jeweiligen Farbe gedruckt werden. Beim Vierfarbdruck sind das die Druckfarben Cyan (C), Magenta (M), Gelb (Y) und Schwarz (K). Die nach Druckfarben separierten Druckvorlagen werden auch Farbauszüge genannt. Die Druckvorlagen werden in speziellen Belichtungsgeräten auf Druckplatten belichtet oder sie werden direkt als digitale Daten an eine digitale Druckmaschine übergeben. Dort werden die Druckvorlagendaten dann beispielsweise mit einer in die Druckmaschine integrierten Belichtungseinheit auf Druckplatten belichtet, bevor unmittelbar anschließend der Auflagendruck beginnt. Es gibt auch digitale Druckmaschinen, die keine Druckplatten benötigen, weil sie z.B. nach dem elektrofotografischen Druckprinzip oder mit Tintenstrahldruck arbeiten.

Nach dem heutigen Stand der Technik werden die Druckvorlagen elektronisch reproduziert. Dabei werden Bilder in einem Farbscanner gescannt und in Form von digitalen Daten gespeichert. Texte werden mit Textverarbeitungsprogrammen erzeugt und Grafiken mit Zeichenprogrammen. Mit einem Layoutprogramm werden die Bild-, Text-und Grafik-Elemente zu einer Druckseite zusammengestellt. Die Daten mehrerer Druckseiten werden mit den Daten weiterer Elemente, wie Passkreuzen, Schnittmarken und Falzmarken sowie Druckkontrollfeldern, zu Druckvorlagen für einen Druckbogen zusammengefasst. Als Datenformate zur Beschreibung der Druckvorlagen werden heute weitgehend die Seitenbeschreibungssprachen PostScript und PDF (Portable Document Format) verwendet. Die PostScript- bzw. PDF-Daten werden vor der Aufzeichnung der Druckvorlagen in einem Raster-Image-Prozessor (RIP) in einem ersten Schritt in Farbauszugswerte für die Farbauszüge C, M, Y und K umgerechnet. Dabei entstehen für jeden Bildpunkt vier Farbauszugswerte als Tonwerte im Wertebereich von 0 bis 100%. Die Farbauszugswerte sind ein Maß für die Farbdichten, mit denen die vier Druckfarben Cyan, Magenta, Gelb und Schwarz auf dem Bedruckstoff gedruckt werden. In Sonderfällen, in denen mit mehr als vier Farben gedruckt wird, ist jeder Bildpunkt durch so viele Farbauszugswerte beschrieben, wie es Druckfarben gibt. Die Farbauszugswerte können z.B. mit 8 Bit je Bildpunkt und Druckfarbe als Datenwert gespeichert sein, womit der Wertebereich von 0 % bis 100% in 256 Tonwertstufen unterteilt ist.

Die Farben der Elemente einer Druckseite sind üblicherweise nicht gleich im CMYK-Farbsystem der Druckfarben definiert, sondern in der Regel in einem anderen Farbsystem. So werden die Bilder in einem Scanner durch Farbfilter in die Farbkomponenten Rot, Grün und Blau (RGB) zerlegt, also in die Komponenten eines dreidimensionalen Farbraums. Die Bilddaten müssen daher vor der Aufzeichnung der Druckvorlagen auf Farbauszugsfilme oder auf Druckplatten vom RGB-Farbraum des Scanners in den CMYK-Farbraum des zu verwendenden Druckprozesses transformiert werden. Gleiches gilt für die digital fotografierten Bilder.

Solche Farbraumtransformationen werden in der Reproduktionstechnik benötigt, weil die verwendeten Geräte und Prozesse bestimmte Einschränkungen und Besonderheiten bei der Darstellung und Wiedergabe der Farben haben und diese Eigenschaften bei allen Geräten und Prozessen verschieden sind. Deshalb gibt es für verschiedene Geräte und Prozesse wie Scanner, Monitore, Prüfdruckgeräte, Druckprozesse usw. unterschiedliche Farbräume, die die Farbeigenschaften des Geräts bzw. Prozesses jeweils optimal beschreiben und die als geräteabhängige Farbräume (englisch: device dependent color space) bezeichnet werden. Neben den geräteabhängigen Farbräumen gibt es noch geräteunabhängige Farbräume (englisch: device independent color space), die auf den menschlichen Seheigenschaften eines sogenannten Normalbeobachters basieren. Solche Farbräume sind beispielsweise der von der Standardisierungskommission CIE (Commission Internationale d'Eclairage) definierte CIE 1931 XYZ-Farbraum (kurz XYZ-Farbraum) oder der daraus abgeleitete CIE 1976 L*a*b* Farbraum (kurz Lab-Farbraum), wobei sich der Lab-Farbraum in der Technik stärker durchgesetzt hat. Will man wissen, ob zwei Farben vom menschlichen Auge als gleich oder verschieden empfunden werden, so genügt dazu die Messung der XYZ- bzw. Lab-Farbkomponenten. Die Lab-Farbkomponenten bilden einen dreidimensionalen Farbraum mit einer Helligkeitsachse (L) und zwei Farbachsen (a, b), die man sich in der Ebene eines Farbkreises vorstellen kann, durch dessen Mittelpunkt die Helligkeitsachse verläuft. Die Lab-Farbkomponenten stehen mit den XYZ-Farbkomponenten über nichtlineare Umrechnungsgleichungen in Beziehung.

Ein Gerät bzw. farbverarbeitender Prozess kann bezüglich seiner Farbeigenschaften charakterisiert werden, indem allen möglichen Wertekombinationen des zugehörigen geräteabhängigen Farbraums (Tonwerte) die Lab-Farbkomponenten (Farbwerte) zugeordnet werden, die ein Mensch bei der mit diesen Tonwertkombinationen erzeugten Farben sieht. Für einen Druckprozess erzeugen die verschiedenen CMYK-Tonwertkombinationen jeweils eine andere gedruckte Farbe. Mit einem Farbmessgerät kann man die Lab-Komponenten der gedruckten Farben ermitteln und den CMYK-Tonwertkombinationen zuordnen. Eine solche Zuordnung, die die mit einem Gerät bzw. Prozess erzeugten geräteabhängigen Farben zu einem geräteunabhängigen Farbraum (XYZ oder Lab) in Beziehung setzt, wird auch als Farbprofil bezeichnet, im Fall eines Druckprozesses als Ausgabe-Farbprofil. Die Definition und Datenformate für Farbprofile sind vom ICC (International Color Consortium) standardisiert (Specification ICC.1 2006-05) und von der ISO normiert worden (ISO ISO15076-1:2005). In einem ICC-Farbprofil ist die Zuordnung der Farbräume in beiden Richtungen gespeichert, z.B. die Zuordnung Lab = f1 (CMYK) und die invertierte Zuordnung CMYK = f2 (Lab). Die mit einem Farbprofil festgelegte Zuordnung kann mit Hilfe eines Tabellenspeichers realisiert werden. Wenn z.B. den CMYK-Tonwerten eines Druckprozesses die Lab-Farbwerte zugeordnet werden sollen, muss der Tabellenspeicher für jede mögliche Wertekombination der CMYK-Tonwerte einen Speicherplatz haben, in dem die zugeordneten Lab-Farbwerte gespeichert sind. Dieses einfache Zuordnungsverfahren hat jedoch den Nachteil, dass der Tabellenspeicher sehr groß werden kann. Wenn jede der CMYK- Tonwerten 256 Dichtestufen hat, gibt es 256⁴ = 4.294.967.296 mögliche Wertekombinationen der CMYK-Tonwerte. Der Tabellenspeicher muss also 4.294.967.296 Speicherzellen mit je 3 Byte oder 6 Byte Wortlänge (je ein Byte oder zwei Byte für L, a, b) haben. Um die Größe des Tabellenspeichers zu reduzieren, wird deshalb eine Kombination von Tabellenspeicher und Interpolationsverfahren zur Beschreibung eines Farbprofils und zur Realisierung einer entsprechenden Farbraumtransformation eingesetzt. In dem Tabellenspeicher sind nur die zugeordneten Lab-Komponenten für ein gröberes, regelmäßiges Gitter von Stützstellen im CMYK-Farbraum gespeichert. Für CMYK-Tonwerte, die zwischen den Gitterpunkten liegen, werden die zuzuordnenden Lab-Farbwerte aus den gespeicherten Lab-Farbwerten der benachbarten Stützstellen interpoliert.

Wie beschrieben werden zur Farbseparation spezielle Drucktabellen (ICC-Farbprofile) verwendet, in denen zusätzlich prozessbedingte Randbedingungen wie zum Beispiel der Farbaufbau (Flächendeckungssumme, maximales Schwarz, Schwarzaufbau) und die Abbildung nichtdruckbarer Farbwerte (Gamut Mapping) eingearbeitet sind. Während Drucktabellen für CMYK-Systeme mit den konventionellen farbmetrischen Methoden gut berechnet werden können, wird dies für Systeme mit Sonderfarben und Mehrfarbensysteme leicht unhandlich und aufwendig.

Die Drucktabellen werden aus den Charakterisierungsdaten eines Druckprozesses berechnet. Charakterisierungsdaten sind die Festlegung einer eindeutigen Beziehung zwischen digitalen Tonwerten und gemessenen Farbwerten im Druck (Tonwerte CMYK / Farbwerte CIEXYZ oder CIELAB). Insbesondere können hierbei die gemessenen Farbwerte als Spektren hinterlegt sein. Die Charakterisierungsdaten könne auch zur Prozesskontrolle und -kalibrierung herangezogen werden.

Ermittelt werden die Charakterisierungsdaten für CMYK-Systeme im Stand der Technik unter Verwendung eines Testelements entsprechend ISO 12642-2:2006 oder unter Verwendung entsprechender herstellerspezifischer Testelemente; dieses ist insbesondere für Mehrfarben-Systeme notwendig.

So ist es beispielsweise aus der DE 10 2004 001 937 A1 bekannt, zur Ermittlung eines ICC-Farbprofils vier Testformen zu erstellen, aus diesen Testformen jeweils Charakterisierungsdaten zu gewinnen, um dann entsprechende Tabellenspeicher zu erstellen, welche die Zuordnung der Farbwerte aus dem geräteunabhängigen Farbraum in den Druckfarbraum beschreiben. Die Verwendung von vier Testformen wird hier der Tatsache geschuldet, dass Sonderfarben durch die Verwendung von Sekundärdruckfarben ersetzt werden sollen. Weiterhin werden hier beispielhaft Matrixoperationen vorgeschlagen, um nicht lineare Veränderungen der Tonwertestufen zu berücksichtigen, d.h. es werden zusätzlich Gradationskorrekturen, z.B. in Abhängigkeit von Tonwertzunahmen der einzelnen Druckpunkte berücksichtigt.

Nachteil dieses Verfahrens ist jedoch der hohe Aufwand, da aufgrund des Einsatzes von Sonderfarben die Testformen viele Farbfelder enthalten müssen um alle notwendigen Farbkombinationen abzudecken. In der bisher verwendeten Color Toolbox werden für den 5-Farbendruck beispielsweise 2 Testtafeln mit je 1230 Farbfeldern (insgesamt 2460 Farbfelder) gedruckt und gemessen. Dies muss für jede Sonderfarbe durchgeführt werden. Der resultierende Aufwand ist entsprechend hoch und erhöht sich beim 6- und 7-Farbendruck weiter (2816 bzw. 2520 Farbfelder in der aktuellen Color Toolbox). Dadurch werden die zur Zuordnung der Farbwerte notwendigen Drucktabellen entsprechend unhandlich. Um einen kompletten Multicolor-Druck mit allen Kombinationen zu generieren sind insgesamt 15 unterschiedliche Testtafeln zu drucken und zu messen (eine für CMYK, je 2 für jede einzelne Sonderfarbe, je 2 für jede Kombination aus 2 Sonderfarben, und 2 für alle drei Sonderfarben gemeinsam). Üblicherweise werden die Testtafeln mehrmals gemessen und dann gemittelt, was den Aufwand nochmals erhöht

In der DE 10 2010 007 858 A1 /US2011199626 A1 wiederum wird ein Testelement vorgestellt, welches spektrale Ist-Daten liefert. Mittels Teilmengen dieser Ist-Daten werden Tonwert- bzw. Tonwertezunahmekurven, Parameter eines Modells des Druckprozesses zur Bestimmung von Spektren von übereinander gedruckten Druckfarben (CMYK) sowie angepasste Eingangsgrößen (C_{b}M_{b}Y_{b}K_{b}) unter Berücksichtigung des Tonwertezuwachses zur Bestimmung von korrigierten Tonwerten (C'M'Y'K') bzw. derer Spektren in einer Berechnungseinrichtung nach dem Modell ermittelt. Zur Berechnung von Charakterisierungsdaten werden dann nur wenige Farbfelder benötigt. Dieses Verfahren ist jedoch nicht für die Verwendung von Sonderfarben geeignet.

Aus der deutschen Patentschrift DE 112011104695 T5 ist bekannt, dass zum Erstellen eines Proofs eines druckbaren Objektes wird eine Datenstruktur bereitgestellt wird, die einen Satz aus Volltonfarben auf einen entsprechenden Satz aus Farbwerten abbildet, welche auf den von einer Messvorrichtung bereitgestellten Messdaten von Farben aus den Volltonfarben basieren, die von einem Drucksystem gedruckt wurden.

Die deutsche Patentschrift DE 000069420760 T2 wiederum offenbart ein Bildverarbeitungssystem und ein Verfahren zum Wandeln von Bilddaten, die einen Farbwert in einem ersten Mehrfarbformat repräsentieren, in Daten, die einen Auszugwert eines oder mehrerer jeweiliger Farbauszüge repräsentieren.

In der US Patentanmeldung US 020110090548 A1 wird dagegen ein Verfahren offenbart, um bestimmte Farbwerte aus Kombinationen von CMYK zu mischen. Dabei gibt es die Möglichkeit, Schwarz zu maximieren und dann aus den restlichen Farben CMY eine Farbwertekombination aus maximiertem Schwarz und zwei der verbleibenden Prozessfarben CMY zu erzeugen, was einer unbunten und zwei bunten Farben entspricht. Eine weitere Möglichkeit ist das Minimieren von Schwarz und dann das Benutzen von CMY in überlappenden Regionen des Lab-Farbraums.

Die US-Patentanmeldung US 201110199626 A1 offenbart ein Verfahren zum Berechnen von Charakterisierungsdaten eines Druckprozesses, welches überschaubarer und weniger kompliziert als zuvor bekannte Verfahren ist, bei denen das Bestimmen von Drucktabellen für CMYK-Drucksysteme mit speziellen Farben oder für Mehrfarbensysteme aufgrund der erforderlichen farbigen Bereiche in Testelementen leicht unhandlich und kompliziert wird. Ein Testelement liefert tatsächliche Spektraldaten. Unter Verwendung von Teilmengen dieser tatsächlichen Daten, Tonwertkurven oder Tonwertverstärkungskurven werden Parameter eines Modells des Druckprozesses zur Bestimmung von Spektren überdruckter Druckfarben und angepasster Eingangsvariablen in einem Rechengerät entsprechend bestimmt mit dem Modell unter Berücksichtigung des Tonwertgewinns, um korrigierte Tonwerte oder deren Spektren zu bestimmen. Dann werden nur wenige farbige Bereiche benötigt, um Charakterisierungsdaten zu berechnen. Ein Testelement zum Bestimmen von Charakterisierungsdaten eines Druckprozesses und eine Vorrichtung zum Ausführen des Verfahrens sind ebenfalls vorgesehen.

Was alle diese Verfahren jedoch nicht offenbaren, ist eine effiziente Möglichkeit Ersatzfarben für nicht im Druckprozess befindliche Sonderfarben auf Basis der im aktuellen Druckprozess verfügbaren Prozessfarben zu berechnen.

Diese Sonderfarben werden im Druck verwendet, wenn farbige Design-Merkmale wie Corporate-Farben, Logos und Grafiken mit hoher Wiedergabegenauigkeit gedruckt werden müssen

Aus Kosten- und Aufwandsgründen ist es häufig zweckmäßig, diese Sonderfarben mit den üblicherweise zur Verfügung stehenden Prozessfarben Cyan, Magenta, Gelb und Schwarz zu drucken oder im Falle des Mehrfarbendrucks mit den zusätzlichen farbraumerweiternden Prozessfarben Rot (Orange), Blau und/oder Grün.

Diese Ersatzfarben können manuell zusammengestellt werden, sind jedoch auch für einige Sonderfarbensysteme (PANTONE®) für den Vierfarbendruck (CMYK) und für den Mehrfarbendruck mit 6 Druckfarben (PANTONE Hexachrome: CMYK, Orange, Grün) tabelliert. Diese Ersatzfarben werden aber wenig verwendet da sie nur für wenige und sehr spezielle Druckprozesse anwendbar sind und in der Regel aus mehr als zwei Buntfarben und Schwarz aufgebaut sind. Die Ergebnisse sind unbefriedigend und werden nur angewendet wenn keine anderen Informationen verfügbar sind. Weiter gibt es Anwendungen in denen aus den vorhandenen Druckprofilen (ICC-Profilen) während der Druckaufbereitung im Workflow-System (z.B. Heidelberg PRINECT®) die entsprechenden Ersatzfarben berechnet werden. Auch hier sind die Ersatzfarben in der Regel aus mehr als zwei Buntfarben und Schwarz aufgebaut und es besteht keine Möglichkeit der Beeinflussung der Ergebnisse der Umrechnung.

Weiter gibt es Anwendungen in denen die Sonderfarben analysiert werden und die Ersatzfarben aus mehreren unterschiedlichen Profilen ausgewählt werden. Hier wird dann versucht eine Darstellung mit z.B. möglichst geringer Flächendeckungssumme zu bestimmen. Das Verfahren ist aufwändig und erfordert mehrere Druckprofile.

Nachteilig ist in allen Fällen das die Prozessstabilität durch den Zusammendruck der Buntfarben und des Schwarz nicht optimal ist. Es ist bekannt, das durch einen Ersatz der vergrauenden Anteile der Buntfarben durch Anteile der unbunten Prozessfarbe eine höhere Stabilität im Druck erreicht wird.

Ein weiterer Nachteil der gegenwärtigen Verfahren ist, dass das aktuelle Weiß des Bedruckstoffs nicht ausreichend berücksichtigt wird. Die Ersatzfarbendarstellung bezieht sich in der Regel auf einen Referenzbedruckstoff.

Ein weiterer Nachteil ist das in einem ICC-Profil einzelne Farbbereiche verändert sein können, was zu fehlerhaften Ersatzfarben führt. Es ist daher zweckmäßig auf dem Vorwärtsmodell des ICC-Profils bzw. auf den originalen Charakterisierungsdaten aufzusetzen.

Die Aufgabe der vorliegenden Erfindung besteht somit darin, ein zweckmäßiges Verfahren für die Berechnung von Ersatzfarben für Sonderfarben zur Farbsteuerung eines Druckprozesses einer Druckmaschine vorzustellen, welches effizienter und weniger aufwändig als die bisher bekannten Verfahren ist.

Die erfindungsgemäße Lösung dieser Aufgabe stellt ein Verfahren mit den Merkmalen von Hauptanspruch 1 dar. Es handelt sich dabei um ein Verfahren zur Berechnung von Ersatzfarben für Sonderfarben zur Farbsteuerung eines Mehrfarben-Druckprozesses einer Druckmaschine zur Abarbeitung eines aktuellen Druckauftrages, die folgenden Schritte umfassend: • Erstellung eines Mehrfarbenprofils aus Charakterisierungsdaten angepasst an einen aktuellen Druckprozess, wobei Charakterisierungsdaten die Festlegung einer eindeutigen Beziehung zwischen digitalen Tonwerten und gemessenen Farbwerten im Druck darstellen und durch Auswertung von minimierten, gedruckten Testelementen zu ermitteln sind, wobei die fehlenden Farbwerte mittels segmentierter spektraler Neugebauer-Gleichungen berechnet werden. • Berechnung der Ersatzfarben, bestehend aus zwei bunten und einer unbunten Farbe, aus dem Mehrfarbenprofil mit mindestens einer Randbedingung, wobei eine Randbedingung darin besteht, dass als unbunte Farbe ein definiertes, festes Schwarz verwendet wird und die bunte Farbe, welche die als zur zu ersetzenden Sonderfarbe komplementäre Druckfarbe eine minimale Buntfarbe darstellt, minimiert, d.h. zu Null wird, wodurch automatisch das definierte, feste Schwarz maximiert wird und wobei fehlende Farbwerte mittels multilinearer Interpolation berechnet werden. • Benutzung der ausgewählten Ersatzfarben in der Farbsteuerung des Mehrfarben-Druckprozesses zur Abarbeitung eines aktuellen Druckauftrages

Entscheidend ist dabei die Berechnung der Ersatzfarben aus den Charakterisierungsdaten anhand eines Suchverfahrens mit Randbedingungen. Sind die Ersatzfarben ermittelt, werden sie in den Farbsteuerungsprozess der Druckmaschine eingebunden. Ob beim Drucken dann die Sonderfarben oder die Ersatzfarben benutzt werden, ist abhängig von den Anwender-Einstellungen der Maschine.

Vorteilhafte und daher bevorzugte Weiterbildungen des Verfahrens ergeben sich aus den zugehörigen Unteransprüchen sowie aus der Beschreibung mit den zugehörigen Zeichnungen.

Eine bevorzugte Weiterbildung ist dabei, dass für die Berechnung der Ersatzfarben bereits vorhandene, standardisierte Charakterisierungsdatensätze verwendet werden, welche an den aktuellen Druckprozess angepasst werden.

Eine weitere bevorzugte Weiterbildung ist dabei, dass für die Berechnung der Ersatzfarben bereits vorhandene, standardisierte ICC-Profile verwendet werden, welche an den aktuellen Druckprozess angepasst werden.

Eine weitere bevorzugte Weiterbildung ist dabei, dass die ermittelten Ersatzfarben zur Anwendung in einem Workflow system in einer Tabelle gespeichert werden.

Eine weitere bevorzugte Weiterbildung ist dabei, dass das Verfahren als Bestandteil in ein Workflow system integriert ist.

Das Verfahren sowie funktionell vorteilhafte Weiterbildungen des Verfahrens werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen.

Die Zeichnungen zeigen:
- Fig. 1:: ein aus dem Stand der Technik bekanntes vierfarbiges Testelement
- Fig. 2:: ein zusammengefasstes fünffarbiges minimales Testelement mit der Sonderfarbe Grün
- Fig. 3:: eine vereinfachte Darstellung eines ICC-Farbprofils
- Fig. 4:: ein Beispiel einer Farbentabelle
- Fig. 5:: den grundlegenden Ablauf des erfindungsgemäßen Verfahrens

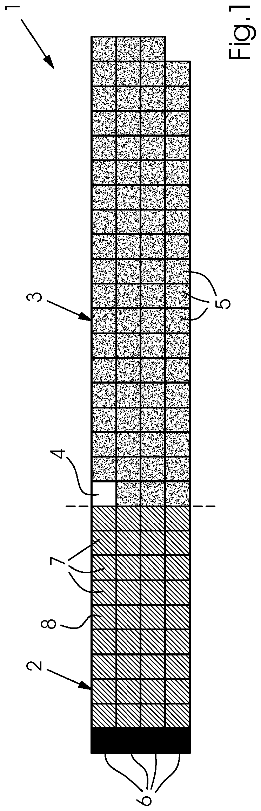

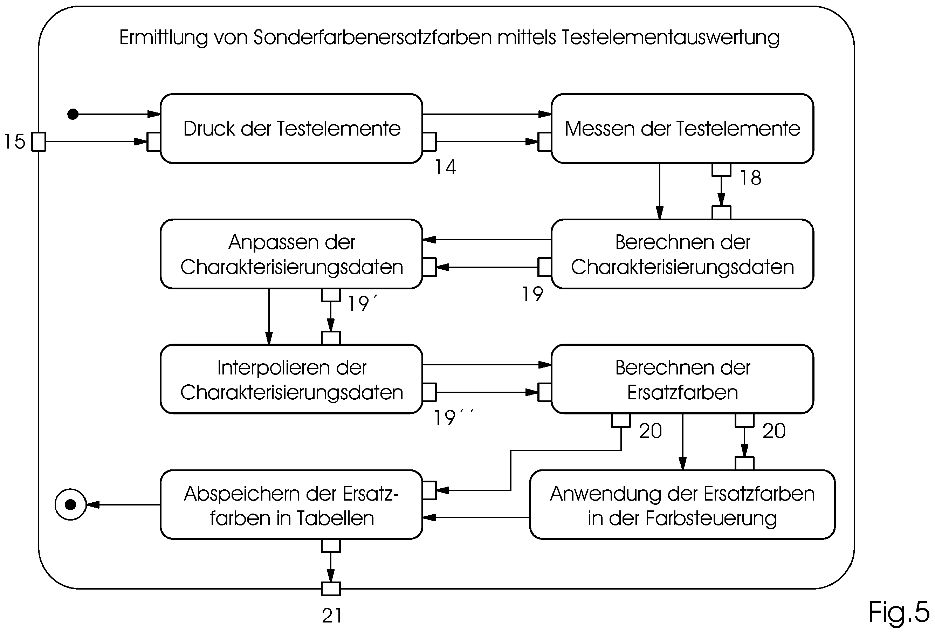

Die bevorzugte Ausführungsvariante des offenbarten Verfahrens basiert auf den Algorithmen der Prinect Color Toolbox zur Generierung von Multicolor-Profilen mit der ein Satz nicht genormter Charakterisierungsdaten in ein Vorwärtsmodell umgerechnet wird. Aus diesem Vorwärtsmodell lassen sich geeignete Charakterisierungsdaten gewinnen. Der Ablauf des Verfahrens in seiner bevorzugten Ausführungsvariante wie er schematisch in Figur 5 dargestellt ist, gliedert sich dabei in mehrere Verfahrensschritte: Zuerst ist die Erstellung von Charakterisierungsdaten nach ISO 12642-2 erforderlich. Für den Vierfarbendruck, Color Management und digitalen Datenaustausch von Dokumenten sind zudem eindeutige Beziehungen zwischen den digitalen Tonwerten und den gedruckten Farbwerten notwendig. Die digitalen Tonwerte liegen in der Regel als Prozessfarben CMYK vor. Im Verpackungsdruck können einzelne oder mehrere Prozessfarben gegen andere produktspezifische Farben, d.h. Sonderfarben, ausgetauscht sein. So kann z.B. die Prozessfarbe Magenta gegen eine rote Sonderdruckfarbe ausgetauscht werden. Die gedruckten Farbwerte hängen vom Druckprozess (Bogenoffsetdruck, Rollenoffsetdruck), vom Prozessstandard (Färbung der Volltöne, Tonwertzuwachs der Prozessfarben) und von den verwendeten Materialien (Bedruckstoff, Druckfarbe) ab. Die digitalen Tonwerte (Rasterprozente) und die zugeordneten Farbwerte (CIELAB, CIEXYZ und/oder Spektren) ergeben dann die Charakterisierungsdaten. Aus den Charakterisierungsdaten werden Farbprofile zur Separation von Bildern und Grafiken sowie Richtwerte zur Prozesskalibrierung und zur Prozesskontrolle gewonnen. Charakterisierungsdatensätze werden dabei mit Hilfe von Testelementen ermittelt. Bekannt ist das Testelement nach ISO 12642-2, vereinfacht dargestellt in Figur 1, das aus definierten Farbfeldern der Prozessfarben CMYK besteht. Neben diesem Standardtestelement kann es weitere herstellerspezifische Testelemente und Weiterentwicklungen der ISO 12642-2 für allgemeine Anwendung mit noch feinerer Abtastung des Farbraums geben. Die Tonwerte der ISO 12642-2 bilden ein regelmäßiges Gitter. Sie haben z.B. für einen Schwarzwert von K = 0% die CMY-Tonwerte 0%, 10%, 20%, 30%, 40%, 55%, 70%, 85% und 100%. Bei höheren Schwarzwerten von K = 20%, 40%, 60%, 80% und 100% sind weniger CMY-Tonwerte vorhanden um die Zahl der Farbfelder insgesamt nicht zu hoch werden zu lassen. In diesem regelmäßigen Gitter können mit einfachen Interpolationsverfahren (Tetraeder-Interpolation, Trilineare-Interpolation) Zwischenwerte für beliebige Tonwertkombinationen ermittelt werden. Höhere Genauigkeiten lassen sich, sofern notwendig, mit den segmentierten Neugebauer-Gleichungen oder bei spektralen Farbwerten mit den spektralen segmentierten Neugebauer-Gleichungen erreichen.

Falls die Erstellung der Charakterisierungsdatensätze zu aufwändig erscheint, können auch bereits vorhandene standardisierte Charakterisierungsdatensätze verwendet werden, welche dann für den aktuellen Druckprozess angepasst werden müssen. Solche standardisierte Charakterisierungsdatensätze für definierte Druckbedingungen wurden für in Amerika und Deutschland übliche Prozessstandards ermittelt. Daneben gibt es noch individuelle Charakterisierungsdatensätze verschiedener Organisationen, Druckereien und Verlage. Die Datensätze beziehen sich auf ein definiertes Papier mit einem spezifischen Papierweißwert. In der Praxis werden häufig Papiere mit anderen Papierweißwerten eingesetzt. Eine Anpassung der Charakterisierungsdaten kann mit bekannten Methoden mit guter Näherung erreicht werden. Eine Methode ist in der ISO-Norm ISO 13655, eine andere Methode in der ISO-Norm 15076 beschrieben. Beide Methoden sind geeignet sofern sich die Papierweißwerte und Papiereigenschaften nicht stark unterscheiden. Ansonsten müssen spezifische Charakterisierungsdaten generiert werden.

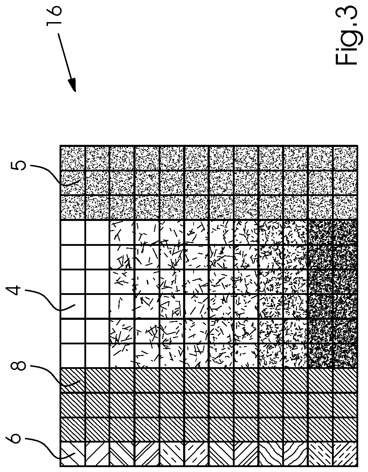

In einer alternativen Ausführungsvariante können die Charakterisierungsdaten direkt aus ICC-Farbprofilen erzeugt werden. Ein vereinfachtes Schema eines solchen ICC-Profils ist in Figur 3 abgebildet. In das ICC-Farbprofil sind zudem mehrere Tabellen eingebettet, unter anderem auch eine Tabelle mit interpolierten Farbwerten eines Charakterisierungsdatensatzes. Diese Tabelle kann aus einem Profil extrahiert werden und zu einem Charakterisierungsdatensatz reduziert werden.

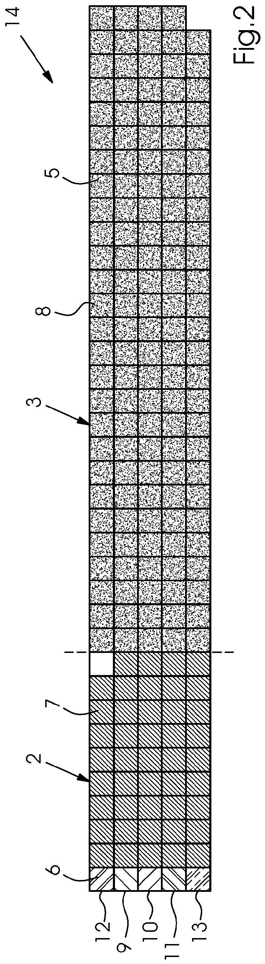

In einer weiteren alternativen Ausführungsvariante werden die Charakterisierungsdaten mittels eines minimalen, optimierten Testelements gewonnen. Aus diesem Testelement lassen sich mit Hilfe der modifizierten und segmentierten spektralen Neugebauer-Gleichungen standardisierte Charakterisierungsdatensätze berechnen. Diese Datensätze zeichnen sich dadurch aus, dass Spektren zu den einzelnen Farbwerten vorliegen und die Spektren von beliebigen Tonwertkombinationen berechnet werden können. Insbesondere lassen sich auch die Spektren der Ersatzfarben der Sonderfarben berechnen. Für Druckverfahren mit mehr als vier Druckfarben lassen sich entsprechende optimierte Testelemente generieren, insbesondere auch optimierte Testelemente mit geringerer Anzahl von Farbfeldern. In DE 10 2004 001 937 A1 ist ein Verfahren beschrieben das mit vergleichbar wenigen Farbfeldern auskommt. Hier wird jeweils eine der bunten Druckfarben CMY durch eine komplementäre Druckfarbe ersetzt. Dieses Verfahren lässt sich sinngemäß auch mit dem minimierten Testelement nach DE 10 2010 007 858 A1 anwenden. DE 10 2010 007 858 A1. In Figur 2 ist ein solches minimiertes Testelement mit vier Farben und einer Sonderfarbe dargestellt, welches mit einer sehr geringen Anzahl von Farbfeldern auskommt.

Für die Berechnung der Ersatzfarben ist es notwendig, ev. fehlende Farbwerte durch Interpolation zu ermitteln. Dafür kommen vor allem Multilineare Interpolationsverfahren in Frage. Die Multilineare Interpolation ist eine gewichtete Interpolation der Farbwerte der Eckpunkte des umgebenden Würfels um den gesuchten Tonwert. Die Eckpunkte werden durch ein Suchverfahren ermittelt. Nehmen wir ein Beispiel mit den aus dem ersten Verfahrensschritt bekannten Tonwerten für den dreidimensionalen Fall (CMY-Tonwerte 0%, 10%, 20%, 30%, 40%, 55%, 70%, 85% und 100%). Für C=15%, M=26% und Y=74% erhalten wir die Eckpunkte C = 10 und 20%, M = 20 und 30% und Y = 70 und 85%. Die relativen Koeffizienten bezüglich des Würfelursprung CMY = 10/20/70 sind dann Ck = (15 - 10)/(20 - 10), Mk = (26 - 20)/(30 - 20) und Yk = (74 - 70)/(85 - 70). Jedem Würfeleckpunkt wird eine Linearkombination a(CMY)der Koeffizienten Ck, Mk, Yk bzw. 1-Ck, 1-Mk, 1-Yk zugeordnet und die Werte der Eckpunkte mit diesen Kombinationen multipliziert und summiert.
a0(CMY) = (1-Ck)x(1-Mk)x(1-Yk)
a1(CMY) = (Ck)x(1-Mk)x(1-Yk)
a2(CMY) = (1-Ck)x(Mk)x(1-Yk)
a3(CMY) = (Ck)x(Mk)x(1-Yk)
a4(CMY) = (1-Ck)x(1-Mk)x(Yk)
a5(CMY) = (Ck)x(1-Mk)x(Yk)
a6(CMY) = (1-Ck)x(Mk)x(Yk)
a7(CMY) = (Ck)x(Mk)x(Yk)
f(CMY) = a0xf(C=10,M=20,Y=70)+ a1xf(C=20,M=20,Y=70)+ ...

Der nächste Verfahrensschritt besteht nun aus der Bestimmung der zu findenden Farbkombination der Ersatzfarbe. Sonderfarben werden farbmetrisch durch einen CIE 1976 L*a*b* (kurz CIELAB) Farbwert beschrieben. Es besteht nun die Aufgabe zu diesem Farbwert passende Tonwertkombinationen der Ersatzfarbe zu finden. Werden im Druck mehr als drei Farben verwendet ist das Ergebnis nicht mehr eindeutig. So gibt es z.B. für dunkle Sonderfarben für einen Bereich von schwarzen Tonwerten passende Kombinationen von CMY die zum gleichen Farbwert führen. Es ist bekannt, das ein hoher Anteil von Schwarz zu einer Stabilisierung im Druck führt, da das Ergebnis ist weniger Anfällig gegen Schwankungen in der Farbgebung der einzelnen Druckwerke ist. Gleichzeitig reduziert ein hoher Anteil von Schwarz die insgesamt eingesetzte Farbmenge. Es gilt jetzt die Ersatzfarbe mit dem höchsten Anteil an Schwarz und dem höchsten Anteil der geeigneten farbraumerweiternden Prozessfarbe zu finden. Das Problem ist äquivalent dazu, die bunten Farbe C, M, Y mit den geringsten Anteilen an Farbe aus der Ersatzfarbe zu entfernen. Eine weitere Randbedingung ist, dass der Farbabstand zwischen der Sonderfarbe und der Ersatzfarbe unter einer definierten Schwelle bleibt oder im Falle dass die Sonderfarbe außerhalb des wiedergebbaren Farbraums liegt minimal wird. Die Suche nach einer optimalen Tonwertkombination für die Ersatzfarbe wird durch ein Suchverfahren mit Randbedingungen in den Charakterisierungsdaten oder im Vorwärtsmodell des Mehrfarbenprofils gelöst. Das Verfahren ist aus DE 10 2011 012 806 A1 bereits bekannt und für diesen Anwendungsfall erweitert worden.

Allgemein gilt: Farbraumtransformationen von M nach N, M = 3, N > M sind überbestimmt, es gibt mehrere Lösungen. Folglich müssen N - M Randbedingungen definiert werden. Randbedingungen im Druck mit 4 Farben sind z.B. ein definiertes festes Schwarz (K), ein maximales Schwarz bei minimalem Farbabstand zwischen Sonderfarbe und Ersatzfarbe oder eine definierte feste Buntfarbe (C, M oder Y) die auch Null sein kann. Randbedingungen im Druck mit mehr als 4 Farben sind z.B. ein definiertes festes Schwarz (K), eine maximale farbraumerweiternde Prozessfarbe Orange, Grün oder Blau oder zwei definierte feste Buntfarben aus C, M oder Y, die auch Null sein können. Bei dem hier vorliegenden Anwendungsfall soll die minimale Buntfarbe aus C, M und Y minimiert (zu Null) werden. Dadurch wird automatisch Schwarz (K) maximiert. Die minimale Buntfarbe ist im Allgemeinen die zur Sonderfarbe komplementäre Druckfarbe. Bei einer Sonderfarbe aus dem Bereich der roten Farbtöne ist dies die Druckfarbe Cyan (C), bei blauen Farbtönen die Druckfarbe Gelb (Y) und bei grünen Farbtönen die Druckfarbe Magenta (M). Ist diese erste Entscheidung nicht zweifelsfrei zu treffen (bei einem gelben Farbton kann Cyan oder Magenta minimal bzw. Null werden) müssen zusätzliche Randbedingungen wie der minimale Farbabstand herangezogen werden.

In einem weiteren Anwendungsfall sollen Schwarz und eine der farbraumerweiternden Buntfarben maximal werden. Dadurch werden in der Regel zwei der üblichen Buntfarben (C, M, Y) zu Null. Es kann also nahezu jede Sonderfarbe durch eine farbraumerweiternde Buntfarbe (O, G, B), eine normale Buntfarbe (C, M, Y) und Schwarz (K) dargestellt werden.

Das Verfahren wird an einem Beispiel beschrieben. Angenommen wir haben einen roten Farbton. Zunächst kann durch eine übliche Berechnung aus dem Mehrfarbenprofil (5-Farbenprofil mit Orange als zusätzlicher Prozessfarbe) eine Wertkombination aus C, M, Y, K und O bestimmt werden.

In einem ersten Schritt wird Schwarz maximiert, so dass eine der bunten Farben C, M, Y zu Null werden. Typischerweise ist das die Farbkomponente C, M, Y mit dem kleinsten Wert. Dieser Wert, z.B. Y, wird zu Null gesetzt. Die zusätzliche Prozessfarbe, hier O, wird konstant gehalten. In diesem ersten Schritt nehmen wir die verbleibenden Tonwerte von M, C und K als Startwert. Mit diesen Tonwerten wird aus den Charakterisierungsdaten oder dem Vorwärtsmodell des Mehrfarbenprofils der zugehörige Farbwert berechnet sowie die Farbdifferenz zu dem Wert der Sonderfarbe. In einem weiteren Schritt wird eine der Komponenten, z.B. M, um einen definierten Betrag (z.B. +2% und -2%) variiert und es werden die Farbdifferenzen zu dem Wert der Sonderfarbe berechnet. Als neuer Wert für M wird der zur kleinsten Farbdifferenz gehörende Wert genommen. Dies Verfahren wird dann für C und K durchgeführt. Dieser zweite Schritt wird solange wiederholt bis M, C und K sich nicht mehr ändern. Dann wird der definierte Betrag halbiert auf hier +1% und - 1% und das Verfahren vom Schritt zwei erneut durchgeführt. Der Betrag wird solange halbiert bis eine untere Schranke von z.B. 0.05% unterschritten wird. Die sich dann ergebenden Werte von MCK sind das gesuchte Zwischenergebnis, die Ersatzfarbe der Sonderfarbe in diesem Charakterisierungsdatensatz.

Im nächsten Schritt wird nun Schwarz (K) konstant gehalten, ebenso die Prozessfarbe Y aus dem obigen Schritt. Es wird jetzt sukzessive der Wert der Prozessfarbe O um einen Betrag, z.B. +2% erhöht. Dann wird mit dem oben skizzierten iterativen Verfahren eine neue Wertekombination M, C gesucht für die der Fehler zwischen dem Farbwert der Sonderfarbe und der berechneten Farbe minimal wird und gleichzeitig nicht größer als der Fehler zu Beginn der Berechnung. Wird der Fehler größer werden 2% wieder abgezogen und das Verfahren mit dem halbierten Prozentsatz, hier +1% fortgeführt. Dieses Verfahren wird fortgeführt bis der Prozentsatz unterhalb einer Schwelle liegt, z.B. 0,05%.

Das Ergebnis ist jetzt optimalerweise ein Satz von drei Farbwerten, Schwarz (K), der farbraumerweiternden Prozessfarbe (O) und einer der drei ursprünglichen Prozessfarben (C, M, oder Y).

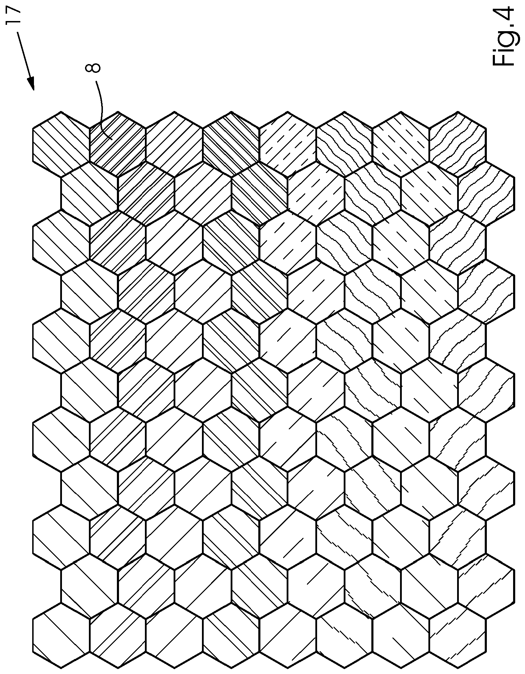

Ist damit die erforderliche Kombination von Prozessfarben zum Ersatz der gewünschten Sonderfarbe ermittelt, wird diese Ersatzfarbe zur Farbsteuerung eines Druckprozesses in einer Druckmaschine angewandt. Die Druckmaschine wird dabei üblicherweise von einem Workflow-Softwaresystem gesteuert. Daher ist es naheliegend die ermittelten Ersatzfarben durch dieses Workflow-System abspeichern und verwalten zu lassen. In der bevorzugten Ausführungsvariante wird das offenbarte Verfahren zur Ermittlung von Ersatzfarben für Sonderfarben in das Workflow-Softwaresystem soweit sinnvoll integriert. Im Detail wird es folgendermaßen umgesetzt: Sonderfarben werden allgemein in Tabellen zusammengefasst. Ein Beispiel sind die Pantone-Tabellen wie z.B. "PANTONE Solid Coated®" mit mehreren Hundert Sonderfarben. Ein weiteres Beispiel für eine solche Farbtabelle ist schematisch in Figur 4 abgebildet. Für alle diese farbmetrisch z.B. durch einen CIELAB-Wert definierten Sonderfarben kann nun im Voraus eine Ersatztabelle für ein bestimmtes Papier berechnet werden. Das Workflow-Softwaresystem schaut dann in dieser Tabelle nach wenn eine Sonderfarbe ersetzt werden soll. Kundendefinierte Sonderfarben die nicht in Tabellen stehen, müssen dann vom Workflowsystem bei Bedarf "on-the-fly" berechnet werden. Auch kann man so vorgehen das nur für die in einem Dokument vorhandenen Sonderfarben Ersatzfarben berechnet werden. Dies wird so beispielweise im Heidelberg Prinect® Workflowsystem gemacht.

Im Folgenden wird das offenbarte Verfahren noch einmal anhand eines Beispiels vorgerechnet. Ein typisches Profil eines Mehrfarbendrucks mit 7 Prozessfarben C, M, Y, K sowie Orange, Blau und Grün ist beispielsweise unter Verwendung der Prinect Color Toolbox erstellt worden. Eine typische Sonderfarbentabelle ist Pantone Solid Coated® herausgegeben von der Firma Pantone. Für eine braune Sonderfarbe PANTONE 1605 C (L = 42.8, a = 34.7, b = 47.5) ergibt sich in einem üblichen Workflowsystem basierend auf dem obigen Profil C = 21.9%, M = 7.3%, Y = 42,2%, K = 38,1%, O = 90,5%, G = 0%, B = 0% mit einer Abweichung zwischen dem Wert der Sonderfarbe und dem im Druck erreichbaren Wert von dE2000 = 0.2. Die Flächendeckungssumme der vier Druckfarben beträgt 199.9%. Die Reduzierung auf 2 Buntfarben und Schwarz ergibt mit dem hier vorgestellten Verfahren basierend auf den Charakterisierungsdaten bzw. dem Vorwärtsmodell des Mehrfarbenprofils C = 0.0%, M = 0.0%, Y = 38.8%, K = 50,4%, O = 90.9%, G = %, B = % mit einer Abweichung zwischen dem Wert der Sonderfarbe und dem im Druck erreichbaren Wert von dE2000 = 0.3. Die Flächendeckungssumme der vier Druckfarben beträgt 180.0%. Für eine blaue Sonderfarbe PANTONE 303 C (L = 18.4, a = -14.9, b = -22.1) ergibt sich in einem üblichen Workflowsystem basierend auf dem obigen Profil C = 100%, M = 19.7%, Y = 22.7%, K = 75,5%, O = 0%, G = 0%, B = 13.3% mit einer Abweichung zwischen dem Wert der Sonderfarbe und dem im Druck erreichbaren Wert von dE2000 = 2.9. Die Flächendeckungssumme der vier Druckfarben beträgt 231.2%. Die Reduzierung auf 2 Buntfarben und Schwarz ergibt mit dem hier vorgestellten Verfahren basierend auf den Charakterisierungsdaten bzw. dem Vorwärtsmodell des Mehrfarbenprofils C = 100.0%, M = 0%, Y = 0%, K = 83,0%, O = 0%, G = 0%, B = 7.9% mit einer Abweichung zwischen dem Wert der Sonderfarbe und dem im Druck erreichbaren Wert von dE2000 = 2.2. Die Flächendeckungssumme der vier Druckfarben beträgt 190.9%.

### Bezugszeichenliste

- 1: Testelement
- 2,3: Teilbereiche
- 4: weißes Farbfeld
- 5: gemischte Farbfelder
- 6: Volltonfarbfeld
- 7: Tonwertfarbfelder
- 8: Farbfeld
- 9: Cyan
- 10: Magenta
- 11: Yellow
- 12: Key (Schwarz)
- 13: Sonderfarbe Grün
- 14: zusammengefasstes minimales Multicolor-Testelement
- 15: Druckmaschine
- 16: ICC-Profil
- 17: Farbentabelle
- 18: Farbdaten eines Testelementes
- 19: Charakterisierungsdaten
- 19': angepasste Charakterisierungsdaten
- 19": interpolierte und angepasste Charakterisierungsdaten
- 20: berechnete Ersatzfarben für Sonderfarben
- 21: digitale Ersatzfarbentabelle

## Patentansprüche

1. Verfahren zur Berechnung von Ersatzfarben für Sonderfarben zur Farbsteuerung eines Mehrfarben-Druckprozesses einer Druckmaschine zur Abarbeitung eines aktuellen Druckauftrages, die folgenden Schritte umfassend:
• Erstellung eines Mehrfarbenprofils aus Charakterisierungsdaten angepasst an einen aktuellen Druckprozess, wobei Charakterisierungsdaten die Festlegung einer eindeutigen Beziehung zwischen digitalen Tonwerten und gemessenen Farbwerten im Druck darstellen und durch Auswertung von minimierten, gedruckten Testelementen zu ermitteln sind, wobei die fehlenden Farbwerte mittels segmentierter spektraler Neugebauer-Gleichungen berechnet werden.
• Berechnung der Ersatzfarben, bestehend aus zwei bunten und einer unbunten Farbe, aus dem Mehrfarbenprofil mit mindestens einer Randbedingung, wobei eine Randbedingung darin besteht, dass als unbunte Farbe ein definiertes, festes Schwarz verwendet wird und die bunte Farbe, welche die als zur zu ersetzenden Sonderfarbe komplementäre Druckfarbe eine minimale Buntfarbe darstellt, minimiert, d.h. zu Null wird, wodurch automatisch das definierte, feste Schwarz maximiert wird und wobei fehlende Farbwerte mittels multilinearer Interpolation berechnet werden
• Benutzung der ausgewählten Ersatzfarben in der Farbsteuerung des Mehrfarben-Druckprozesses zur Abarbeitung eines aktuellen Druckauftrages

2. Verfahren nach Anspruch 1
**dadurch gekennzeichnet,**
**dass** für die Berechnung der Ersatzfarben bereits vorhandene, standardisierte Charakterisierungsdatensätze verwendet werden, welche an den aktuellen Druckprozess angepasst werden.

3. Verfahren nach Anspruch 1
**dadurch gekennzeichnet,**
**dass** für die Berechnung der Ersatzfarben bereits vorhandene, standardisierte ICC-Profile verwendet werden, welche an den aktuellen Druckprozess angepasst werden.

4. Verfahren nach einem der vorherigen Ansprüche
**dadurch gekennzeichnet,**
**dass** die ermittelten Ersatzfarben zur Anwendung in einem Workflowsystem in einer Tabelle gespeichert werden.

5. Verfahren nach einem der vorherigen Ansprüche
**dadurch gekennzeichnet,**
**dass** das Verfahren als Bestandteil in ein Workflowsystem integriert ist.

## Claims

1. Method of calculating substitution colours for spot colours for colour control in a multicolour printing operation in a printing machine for processing a current print job, the method comprising the steps of
• creating a multicolour profile from characterization data adapted to a current print job, wherein characterization data represent the definition of an unequivocal relationship between digital tone values and measured colour values in the print and are to be determined by analyzing minimized printed test elements, wherein the missing colour values are calculated by means of segmented spectral Neugebauer equations,
• calculating the substitution colours, consisting of two chromatic and one achromatic colour, from the multicolour profile with at least one boundary condition, wherein one boundary condition consists of the fact that the achromatic colour is a defined, fixed black and the chromatic colour, which is the process colour that is complementary to the spot colour and represents a minimum chromatic colour, is minimized, i.e. becomes zero, automatically causing the defined, fixed black to be maximized, and wherein the missing colour values are calculated by multilinear interpolation,
• using the selected substitution colours for colour control in the multicolour printing operation to process a current print job.

2. Method according to claim 1,
**characterized**
**in that** pre-existing standardized characterization data sets that are adapted to the current printing operation are used to calculate the substitution colours.

3. Method according to claim 2,
**characterized**
**in that** pre-existing standardized ICC profiles that are adapted to the current printing operation are used to calculate the substitution colours.

4. Method according to any one of the preceding claims,
**characterized**
**in that** the determined substitution colours are saved in a table in a workflow system.

5. Method according to any one of the preceding claims,
**characterized**
**in that** the method is a part of and integrated into a workflow system.

## Revendications

1. Procédé de calcul de couleurs de substitution pour couleurs spéciales pour la commande de l'encrage d'un processus d'impression multicolore d'une machine à imprimer pour le traitement d'un travail d'impression actuel, comprenant les étapes suivantes :
• Création d'un profil multicolore à partir de données de caractérisation adaptées à un processus d'impression actuel, les données de caractérisation représentant la définition d'une relation univoque entre les valeurs tonales numériques et les valeurs de couleur mesurées lors de l'impression et devant être déterminées par l'évaluation d'éléments de test imprimés minimisés, les valeurs de couleur manquantes étant calculées au moyen d'équations spectrales de Neugebauer segmentées
• Calcul des couleurs de substitution, consistant en deux couleurs chromatiques et une couleur achromatique, à partir du profil multicolore avec au moins une condition limite, une condition limite consistant en ce qu'un noir fixe défini est utilisé comme couleur achromatique et que la couleur chromatique, qui représente en tant que couleur d'impression complémentaire de la couleur spéciale à remplacer une couleur chromatique minimale, est minimisée, c'est-à-dire devient nulle, le noir fixe défini étant automatiquement maximisé et les valeurs de couleur manquantes étant calculées au moyen d'une interpolation multilinéaire
• Utilisation des couleurs de substitution sélectionnées dans la commande de l'encrage du processus d'impression multicolore pour le traitement d'un travail d'impression actuel

2. Procédé selon la revendication 1
**caractérisé en ce**
**que** des enregistrements de données de caractérisation standardisés déjà existants, adaptés au processus d'impression actuel, sont utilisés pour le calcul des couleurs de substitution.

3. Procédé selon la revendication 1
**caractérisé en ce**
**que** des profils ICC standardisés déjà existants, adaptés au processus d'impression actuel, sont utilisés pour le calcul des couleurs de substitution.

4. Procédé selon l'une des revendications précédentes
**caractérisé en ce**
**que** les couleurs de substitution déterminées sont enregistrées dans un tableau en vue de leur utilisation dans un système de flux de travail.

5. Procédé selon l'une des revendications précédentes
**caractérisé en ce**
**que** le procédé est intégré en tant que composante dans un système de flux de travail.
